# EUROPEAN PATENT SPECIFICATION

(11) **EP 0 487 025 B1**
(45) Date of publication and mention of the grant of the patent: **19.04.1995**
(21) Application number: 91119716.8
(22) Date of filing: 19.11.1991
(51) Int. Cl.: H01R 13/53

(54) **Power electrical cable plug**
Steckverbinder für Leitungskabel
Fiche pour câble d'énergie électrique

(30) Priority: 20.11.1990 JP 312721/90
(43) Date of publication of application: 27.05.1992
(73) Proprietor: KABUSHIKI KAISHA TOSHIBA, Kawasaki-shi, Kanagawa-ken 210 (JP); SHOWA ELECTRIC WIRE & CABLE CO.,LTD., Kawasaki-shi, Kanagawa-ken (JP)
(72) Inventor: Masaki, Nobuo, Fuchu-shi, Tokyo (JP); Ohtsuka, Syouzou, Tama-shi, Tokyo (JP); Onodera, Isao, Tama-shi, Tokyo (JP); Miyagawa, Masaro, Tama-shi, Tokyo (JP); Yoshida, Tetsuo, Hachiouji-shi, Tokyo (JP); Kojima, Ryouichi, Hiratsuka-shi, Kanagawa-ken (JP); Hasegawa, Naoya, Yokohama-shi, Kanagawa-ken (JP); Suzuki, Kei, Tokyo (JP)
(74) Representative: Blumbach, Kramer & Partner

(56) References cited:
- EP-A- 0 148 394
- EP-A- 0 389 677
- DE-A- 2 441 091
- FR-A- 1 455 728

## Description

### BACKGROUND OF THE INVENTION

### Field of the Invention

The present invention relates to a cable plug for high voltage usage, or a high-voltage plug according to the preamble of the main claim. More particularly, this invention relates to a plug for connecting a power cable to an electric device which is operated at voltage of 1 kv to several 10 kv.

### Description of the Prior Art

In case of connecting a power cable to an electric device which is operated at about 1 kv to some 10 kv, it is necessary to insulate the cable with special means. Namely, to prevent a high-voltage current flowing in the conductive wire of the cable from leaking, special structures and materials for insulating the plug have been proposed or used so far.

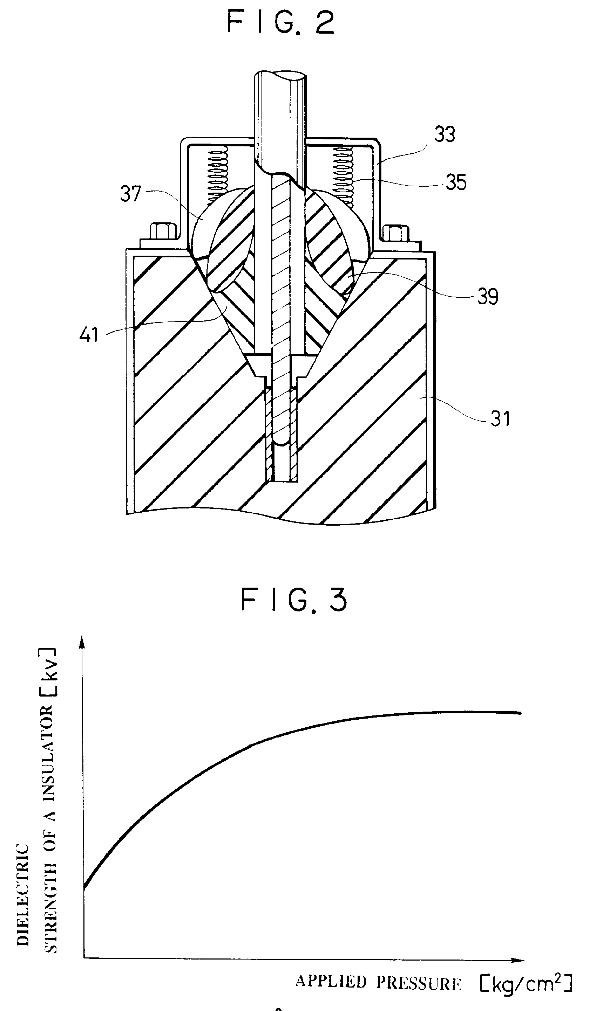

As the materials for insulating such a high-voltage plug, insulating rubbers and other organic materials such as polyethylene have been used. However, the dielectric strength of these materials is apt to change with applied pressure thereto as shown in Fig.3. Namely, the dielectric strength increases as the pressure becomes large until the pressure reaches a certain value.

Accordingly, conventional high-voltage plugs are provided with means for increasing the dielectric strength of such insulating materials by applying suitable pressure thereto. Two typical examples of such conventional high-voltage plugs are explained here.

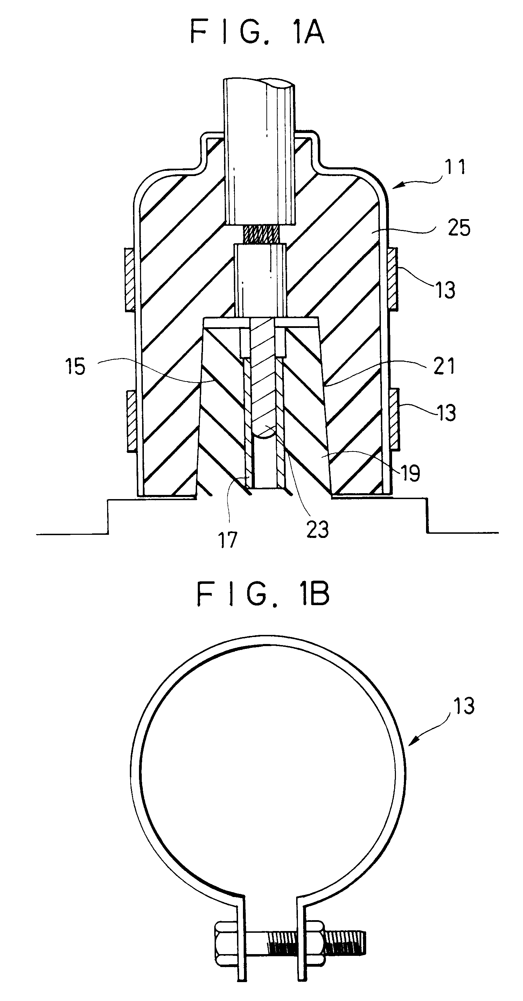

Figures 1A and 1B show structures of a conventional plug 11, a plug receiver 15 and ribbon-shape bands 13. The bands 13 are provided on the outer surface of the plug 11 to apply pressure to an insulating material incorporated therein. In more detail, a pair of plug receivers 15 for electrical connection are provided on the electric device 12, and each receiver 15 is formed into a projection and comprises a contact terminal 17 and an insulating material 19 provided around the terminal 17. Moreover, a cavity portion 21 of the plug 11 is fitted around these projections 15 so as to connect its contact terminal 23 to the contact terminals 17. Accordingly, it is possible to apply pressure to the insulating material 19 by compressing the plug 11 with the bands 13 from the outside. As a result, the dielectric strength of the material 19 can be increased.

Fig.2 shows another conventional example. As shown in the same drawing, this case has an epoxy bushing 31 to which a protection tube 33 is secured with several screws. Moreover, the protection tube 33 has springs 35 for applying pressure to a semiconductive rubber layer 39 and an insulating rubber 41 through a metal plate 37.

As explained above, the structure of these conventional plugs is so complicated that handling these plugs is very troublesome, moreover, it is very difficult to uniformly apply pressure to the insulating materials.

### SUMMARY OF THE INVENTION

The present invention was made to solve the above-mentioned problem in the conventional technology, therefore, it is an object thereof to provide a high-voltage plug which can be easily handled and is excellent in the insulating ability.

To achieve this object, a high-voltage plug comprising the features of claim 1 is provided.

Advantageous embodiments of the inventive plug are characterized by the sub claims. In particular, the above mentioned pressure control means is the most important element of the present invention. According to the above described construction of the present invention, it becomes possible to reduce the number of parts necessary for the plug system and facilitate attachment of the plug.

The features and these and other objects and advantages of the present invention will be more apparent from the following description of a preferred embodiment, taken in conjuction with the accompanying drawings.

### BRIEF DESCRIPTION OF THE DRAWINGS

Fig.1 shows an example of conventional high-voltage plugs;
Fig.2 shows another example of conventional high-voltage plugs;
Fig.3 shows relation between pressures to be applied to a insulating material and dielectric strengths of the insulating material;
Fig.4 shows a schematic construction of a system utilizing a first embodiment of the present invention;
Fig.5 shows a cross section of a plug used in the first embodiment;
Fig.6 shows a cross section of a plug receiver to be fitted around in the plug shown in Fig.5 so as to supply the system with high voltage;
Fig.7 is a diagram for explaining a problem to be more improved in the first embodiment;
Figs.8A to 8C are diagrams for explaining phenomena by which the problem explained by Fig.7 is caused;
Fig.9 shows points improved in a second embodiment of the present invention;
Figs.10A to 10D are diagrams for explaining the effect of the improvement in the second embodiment; and
Figs.11A and 11B respectively show another embodiments of the present invention.

### DETAILED DESCRIPTION OF THE EMBODIMENT

Hereinafter, a first embodiment of the present invention and a second embodiment in which a problem of the first embodiment is improved will be respectively explained.

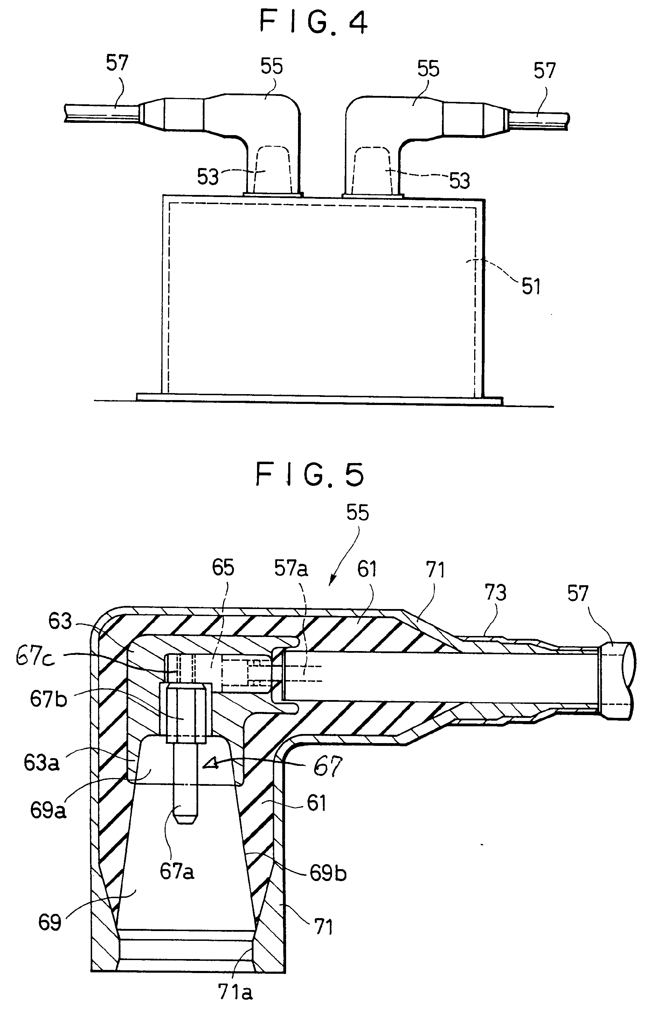

Fig.4 shows schematic construction of a system utilizing the embodiment of the present invention. In the same drawing, a high-voltage electric device not shown is contained in a box 51, and plug receivers 53 formed into a pair of projections are mounted on the box 51. Around each of these plug receivers 53, the bottom end portion of an L-shape plug 55 is fitted to make electrical contact relation therewith. Moreover, each plug 55 is connected to a power cable 57 comprising a 22 kv high-voltage crosslinking polyethylene cable at the right or left end portion thereof. Incidentally, these two plugs 55 have completely the same structure.

Fig.5 shows a detailed cross section of the structure of the plug 55. As shown in the same drawing, the plug 55 is provided with an insulating layer 61 consisting of an L-shape insulating rubber material. At the central portion of the corner portion in the insulating layer 61, a semi-conductive layer 63 consisting of an L-shape hard rubber material is embedded. Moreover, the semiconductive layer 63 is provided coaxially to the upper central axis thereof with a copper conductive part 65 in which the left half portion is solid, but the right half portion is hollow.

At the right end portion, the conductive part 65 is electrically connected to a core wire 57a of the power cable 57 through a contact piece not shown in the same drawing. While, the left end portion of the conductive part 65 has a flat lower face and contains a female screw extending vertically in the same drawing at the central portion thereof. Moreover, the female screw is engaged with an upper male screw portion 67c of a contact terminal 67 which further includes a cylindrical lower portion 67a and a hexagonal-prism intermediate portion 67b.

Moreover, a truncated-cone-shape fitting portion 69 opening downwards is provided coaxially to the contact terminal 67 in the left end portion of the insulating layer 61. The upper portion 69a of the fitting portion 69 is formed with an annular portion 63a of the semiconductive layer 63, and the intermediate portion 69b is constructed with the insulating layer 61. Besides, the upper portion 69a and the intermediate portion 69b of the fitting portion 69 are connected to each other so as to form a continuous or the same side face of a truncated cone.

A grounded outer cover 71 is provided on the outer surface of the insulating layer 61. The left bottom end portion of the cover 71 has a convex portion 71a with a substantially trapezoidal cross section on the inner circumference thereof as well as covers the left bottom end portion of the insulating layer 61. Through an opening of the right end portion of the outer cover 71 or of the right end portion of the insulating layer 61, the power cable 57 is inserted into the plug 55 so as to connect the core wire 57a of the cable 57 with the conductive part 65 described above. Moreover, an insulating tape 73 is wound around the right end portion of the outer cover 71.

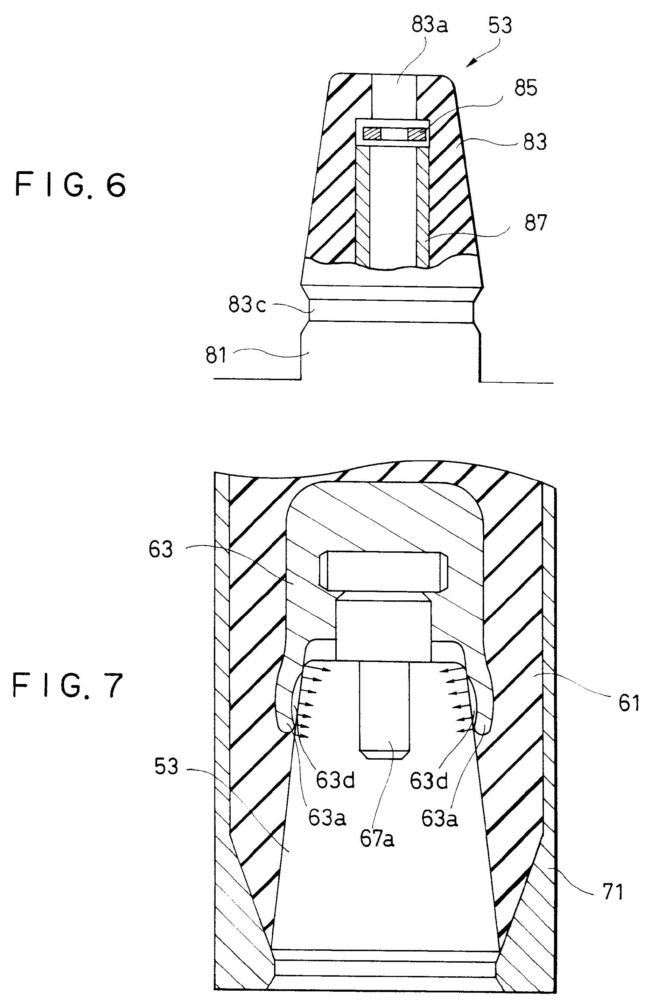

Fig.6 shows a cross section of the plug receiver 53 to be fitted around in the above mentioned plug 55. The plug receiver 53 is mounted on an attachment base 81 of the box 51, and comprises a truncated-cone projection 83 consisting of an epoxy resin and extending upwards from the base 81. The projection 83 has a side face with the same inclination as that of the above-mentioned fitting portion 69 comprising the insulating layer 61 and semi-conductive layer 63, and the outer diameter of the former 83 is slightly larger (by about 2mm) than the inner diameter of the latter 69.

Namely, due to the slight difference between these two outer diameters, pressure is applied to the insulating layer 61 when the plug 51 is fitted around the plug receiver 53. Incidentally, a trapezoidal groove 83c with a diameter slightly larger (by about 2mm) than that of the above mentioned convex portion 71a is formed in the bottom end portion of the fitting portion 69. Therefore, the groove 83c serves as holding means for engaging the plug 55 with the plug receiver 53.

Moreover, a cylindrical hole 83a is formed in the projection 83 coaxially to the central axis thereof, and a cylindrical metal piece 87 is embedded in the inner wall of the hole 83a. At the intermediate portion of the hole 83, a contact ring 85 electrically connecting to the metal piece 87 is provided. Incidentally, the bottom end of the metal piece 87 is connected to an input terminal of the above-described electric device.

In this embodiment, an insulating rubber material is used for producing the insulating layer 61, a hard rubber material is used for the semi-conductive layer 63 and the conductive part 65 is made of copper, moreover, the projection 83 of the plug receiver 53 consists of an epoxy resin.

Moreover, the pressure to be generated on the contact face between the plug 55 and the plug receiver 53 on engaging them with each other is adjusted at about several kg/cm2, for example, by setting the difference between the outer diameter of the projection 83 and the inner diameter of the fitting portion 69 at 1mm.

In such a cable plug constructed as mentioned above, when the fitting portion 69 of the plug 55 is fitted around the truncated-cone projection 83 on the attachment base 81, the above mentioned contact ring 85 is electrically connected to the conductive part 65 through the contact terminal 67 incorporated in the plug 55. Moreover, when the convex portion 71a is completely fitted in the groove 83c, the insertion position of the projection 83 to the plug 55 is determined. Incidentally, the plug 55 is compressed by a compression band which is not shown in the drawings, but is wound around the outer circumference of the left bottom end portion of the plug 55.

Accordingly, the left lower portion of the insulating layer 61 interposed between the compression band and the projection 83 is compressed by both of the compression force of the band and the pressure generated by engagement of the fitting portion 69 and the projection 83. Therefore, the dielectric strength is elevated so that sufficient insulation ability of the insulating layer 61 can be guaranteed.

Then, in this case, the inner circumference of the annular portion 63a should be uniformly extended at the fitting part when the projection 83 is inserted in the fitting portion 69 of the plug 55, if both ends of the annular portion 63a were free. However, as the base potion of the annular portion 63a is rigidly fixed with the body of the semiconductor layer 63, the base potion is little extended. Therefore, stress is generated only at the base portion , so that the portion 63a is deformed as shown in Fig.7 for the reason that will be explained below. That is, the annular portion 63a is bent more than the inclination angle of the side face of the truncated cone decided by the projection 83, and thereby a small gap 63d is formed between them.

As a result, high voltage is generated between the small gap 63d, so that slight electric discharge is caused. Accordingly, the insulating ability of an epoxy resin portion included in the projection 53 corresponding to the small gap 63d is deteriorated during long-term operation, and the dielectric strength thereof is also lowered.

Hereinafter, the reason of generation of the small gap 63d will be explained.

Since the structure of the semiconductive layer 63 is symmetrical about the central axis thereof, considering a sliced part cut off from the annular portion 63a by a very small length in a circular direction, then a deflection of the part is nearly equal to that of a cantilever applied with a force F1 caused by inserting the projection 83 into the annular portion 63a.

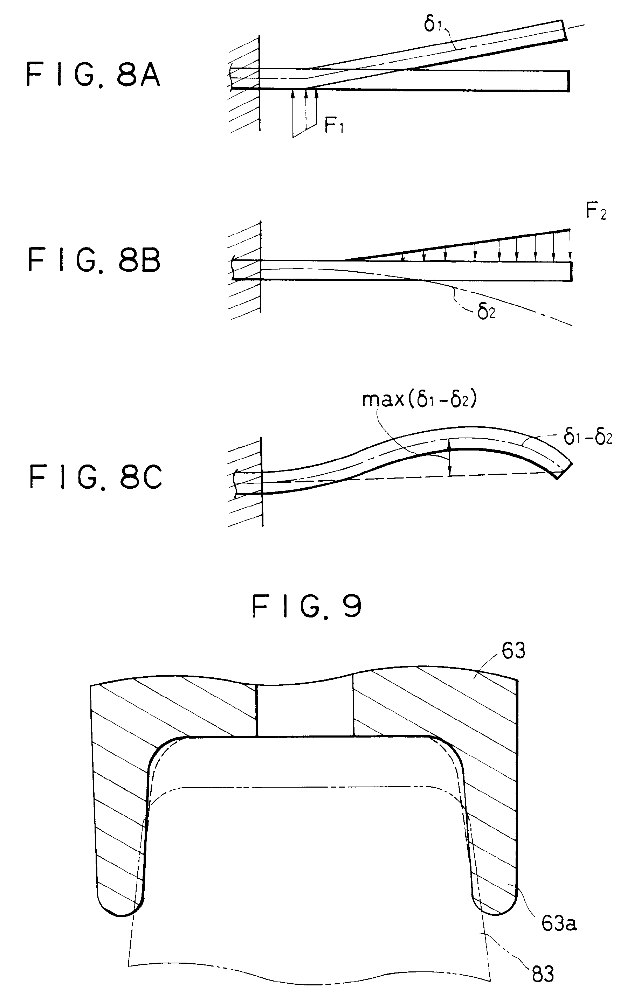

According to a principle of strength of materials, the cantilever is bent to the deflection curve δ1 shown in Fig. 8A. And the deflection δ1 of the part causes a compression force F2 on the insulating layer 61 surrounding the annular portion 63a, which produce the reaction force F2 on the cantilever as shown in Fig. 8B. Then, the cantilever is also bent downwards to the deflection curve shown in the same figure. As a result, the cantilever is deformed into the the deflection curve (δ1-δ2) as shown in Fig. 8C.

Accordingly, the above-mentioned small gap 63d is generated between the annular portion 63a and the projection 83. Practically, a circular stress is also caused in the annular portion 63a by being extended in a circular direction, however it is not considered in the above discussion because of smallness of its influence to the deflection of the cantilever.

To solve this problem in the above described embodiment, the second embodiment of the present invention is so improved that the gap due to the insertion of the projection can be prevented, and preferred insulating ability can be maintained over a long term.

Namely, in the second embodiment, the inclination gradient of the inner side wall of the annular portion 63a is set slightly larger as shown by the solid line in Fig.9 by enlarging the diameter of the top end portion thereof as compared with that in the first embodiment as shown by the dotted line in the same drawing.

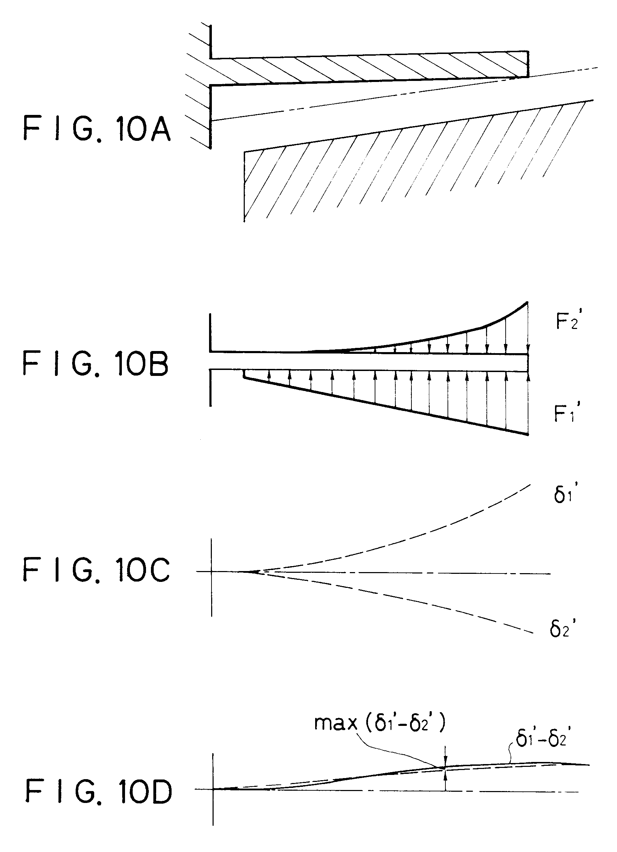

In more detail, now considered is a case where the inclination gradient of the inner side wall of the annular portion 63a is changed as shown in Fig.10A.

In this modified case, the force F1′ applies to the cantilever instead of F1 when the projection inserts into annual portion 63a, which deflects the cantilever to the curve δ1′ having an upward concave as shown in Fig.10C. And this deflection causes a force F2′ as the same principle as described above, which bent the cantilever to the deflection curve δ2′. Therefore the cantilever, as a result, is bent in the deflection curve ( δ1′- δ2′) shown in Fig. 10D. However, since (δ1′- δ2′) is nearly equal to zero at any points of the cantilever, the gap as above mentioned is not generated. As a result, discharge between the annular portion 63a and the projection 58 is not caused.

Accordingly, by modifying the structure of the annular portion 63a as designed in the second embodiment, the problem to be caused by the above-mentioned small gap can be almost avoided.

Therefore, since the cable plug based on the construction of the second embodiment can prevent the gap generation between the annular portion 63a and the projection 83 as shown in Fig.7, it can maintain preferred insulating ability over a long period of time.

Incidentally, though the inner diameter of the annular portion 63a of the semi-conductive layer 63 is changed in the second embodiment, the same effect can be obtained by modifying the outer diameter of the distal end portion of the projection 83. Namely, the inclination of the side wall of the projection 83 may be decreased by reducing the diameter of the distal end portion by about 1.6 mm.

Moreover, though the side wall of annular portion 63a is lineally modified, it may be changed into a curve.

Besides, though the L-shape cable plug is mentioned in the first and second embodiments, the fitting portion may be also applied to T-shape, Y-shape or cross-type cable plugs.

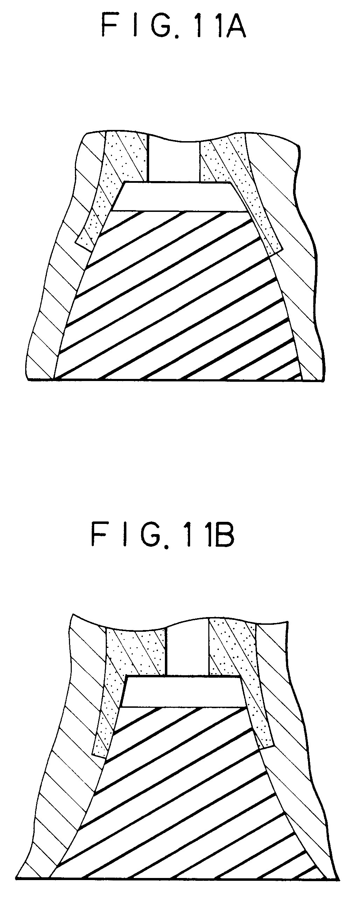

In addition, the shape of the fitting portion is not limited to the truncated cone type, but the portion may be formed in a shape with a narrow skirt portion as shown in Fig.11(a) or in a shape with a wide skirt portion as shown in Fig.11(b).

Various modifications will become possible for those skilled in the art after receiving the teachings of the present disclosure without departing from the scope thereof.

## Claims

1. High-voltage plug (55) for performing electrical connection with being fitted around a plug receiver (53) which includes power receiving means (87) and is formed into a projection (83), comprising
(1) an electrically conductive part (65, 67) which is connected to a core wire (57a) of a power-supply cable (57) and has a connection part (67a) for connecting to a contact terminal (85) of the plug receiver (53);
(2) an insulating layer part (61) which is provided around the conductive part (65) for insulating an outer case (71) from high-voltage portions in the plug;
(3) a fitting portion (69) comprising a cavity whose opening is fitted around the plug receiver (53) so as to facilitate connection between the contact terminal (85) of the plug receiver and the connection part (67a) of the plug;
(4) pressurizing means for increasing the dielectric strength of the insulating layer part (61) by applying pressure on it, characterized by
(5) a semi-conductive layer part (63) which is provided around the conductive part (65, 67) so as to prevent from high voltages centering in small parts of the plug, the exterior of said semi-conductive layer part (63) being surrounded by said insulating layer part (61);
(6) said pressurizing means being provided by slightly lessening the inner dimension of the fitting portion (69) as compared with the outer dimension of the plug receiver (83);
(7) pressure control means for making the pressure to be uniform being provided by variably adapting said dimensions;
(8) holding means (71a) for engaging the plug (55) with the plug receiver (53) in a certain relation.

2. Plug according to claim 1, wherein
(1) the fitting portion (69) is formed into a truncated cone shape where the diameter of the opening is larger than that of the top end portion, and the height is slightly larger than that of the projection (83) of the plug receiver (53) to produce a space when they are fitted;
(2) the fitting portion (69) is having an opening front portion consisting of the insulating layer part (61) and an annular rear portion (63a) consisting of the semi-conductive layer part (63) of which inside wall completely covers the space; further
(3) the inclination gradient of the side wall in the opening portion (69b) corresponding to the annular portion (63a) is set slightly larger than that corresponding to the insulating layer part so that the difference between the inner diameter of the annular portion and the outer diameter of the projection of the plug receiver is gradually reduced toward the top end portion, whereby the pressure to be applied over the contact face can be suitable controlled.

3. Plug according to claim 2, wherein the difference between the inner diameter of the annular portion (63a) and the outer diameter of the projection (83) is linearly reduced toward to the top so as to control the pressure to be applied over the contact face.

4. Plug according to claim 3, wherein the difference is made zero at the top end portion of the annular portion (63a).

5. Plug according to any of claims 2 to 4, wherein the skirt portion of the truncated cone shape in the fitting portion has a slightly concave surface and the corresponding skirt portion of the projection of the plug receiver has a slightly convex surface.

6. Plug according to any of claims 2 to 4, wherein the skirt portion of the truncated cone shape in the fitting portion has a slightly convex surface and the corresponding skirt portion of the projection of the plug receiver has a slightly concave surface.

7. Plug according to any of claims 1 to 6, wherein the plug is formed into a L shape, and is provided with the fitting portion at one end thereof and an opening for connection to a power supply cable at the other end thereof.

8. Plug according to any of claims 1 to 6, wherein the plug is formed into a T shape.

## Patentansprüche

1. Hochspannungsstecker (55), der zur Ausführung einer elektrischen Verbindung um einen Steckeraufnehmer (53) herum angebracht wird, wobei der Steckeraufnehmer eine Stromaufnahmeeinrichtung (87) enthält und als Vorsprung (83) ausgebildet ist, enthaltend
(1) ein elektrisch leitendes Bauteil (65, 67), das an eine Kernader (57a) eines Stromversorgungskabels (57) angeschlossen ist und einen Anschlußteil (67a) zum Anschließen an einen Kontaktanschluß (85) des Steckeraufnehmers (53) aufweist;
(2) ein Isolierschichtbauteil (61), das um das leitende Bauteil (65) herum zur Isolierung eines Außengehäuses (71) von hochspannungsführenden Bereichen in dem Stecker vorgesehen ist;
(3) ein Paßstück (69) mit einem Hohlraum, dessen Öffnung derart um den Steckeraufnehmer (53) paßt, daß die Verbindung zwischen dem Kontaktanschluß (85) des Steckeraufnehmers und dem Anschlußteil (67a) des Steckers unterstützt wird;
(4) eine Druckeinrichtung zur Vergrößerung der dielektrischen Stärke des Isolierschichtbauteils (61) durch Aufbringen von Druck auf dieses, **gekennzeichnet** durch
(5) ein Halbleiterschichtbauteil (63), das um das leitende Bauteil (65, 67) herum derart vorgesehen ist, daß verhindert wird, daß sich Hochspannungen in kleinen Teilen des Steckers konzentrieren, wobei das Äußere des Halbleiterschichtbauteils (63) von dem Isolierschichtbauteil (61) umgeben ist; wobei
(6) die Druckeinrichtung dadurch geschaffen ist, daß die Innenabmessung des Paßstücks (69) im Vergleich zur Außenabmessung des Steckeraufnehmers (83) etwas kleiner ist;
(7) eine Drucksteuereinrichtung zur Vergleichmäßigung des Druckes dadurch geschaffen ist, daß diese Abmessungen variabel angepaßt sind;
(8) eine Halteeinrichtung (71a) für einen Eingriff des Steckers (55) in den Stekkeraufnehmer (53) in einer bestimmten Beziehung.

2. Stecker nach Anspruch 1, bei dem
(1) das Paßstück (69) kegelstumpfförmig ausgebildet ist, wobei der Durchmesser der Öffnung größer ist als der des obersten Endbereiches und die Höhe etwas größer ist als die des Vorsprungs (83) des Steckeraufnehmers (53), um bei deren Zusammenbau einen Zwischenraum zu schaffen;
(2) das Paßstück (69) einen sich öffnenden Vorderbereich aufweist, der aus dem Isolierschichtbauteil (61) besteht, und einen ringförmigen Hinterbereich (63a) aufweist, der aus dem Halbleiterschichtbauteil (63) besteht, dessen Innenwand den Zwischenraum vollständig bedeckt; bei dem desweiteren
(3) der Neigungsgradient der Seitenwand in dem sich öffnenden Bereich (69b), der dem Ringbereich (63a) entspricht, etwas größer ist als der dem Isolierschichtbauteil entsprechende, so daß der Unterschied zwischen dem Innendurchmesser des Ringbereiches und dem Außendurchmesser des Vorsprungs des Steckeraufnehmers zum obersten Endbereich hin allmählich abnimmt, wodurch der auf die Kontaktfläche aufzubringende Druck in geeigneter Weise steuerbar ist.

3. Stecker nach Anspruch 2, bei dem der Unterschied zwischen dem Innendurchmesser des Ringbereiches (63a) und dem Außendurchmesser des Vorsprungs (83) zum obersten Ende hin linear abnimmt, um den auf die Kontaktfläche aufgebrachten Druck zu steuern.

4. Stecker nach Anspruch 3, bei dem der Unterschied am obersten Ende des Ringbereiches (63a) Null ist.

5. Stecker nach einem der Ansprüche 2 bis 4, bei dem der Randbereich der Kegelstumpfform im Paßstück eine leicht konkave Oberfläche hat und der entsprechende Randbereich des Vorsprungs in dem Steckeraufnehmer eine leicht konvexe Oberfläche hat.

6. Stecker nach einem der Ansprüche 2 bis 4, bei dem der Randbereich der Kegelstumpfform im Paßstück eine leicht konvexe Oberfläche hat und der entsprechende Randbereich des Vorsprungs des Steckeraufnehmers eine leicht konkave Oberfläche hat.

7. Stecker nach einem der Ansprüche 1 bis 6, bei dem der Stecker insgesamt L-förmig ist und an seinem einen Ende mit dem Paßstück und an seinem anderen Ende mit einer Öffnung zum Anschluß an ein Stromversorgungskabel ausgebildet ist.

8. Stecker nach einem der Ansprüche 1 bis 6, dadurch **gekennzeichnet**, daß der Stecker T-förmig ist.

## Revendications

1. Fiche mâle (55) pour haute tension pour réaliser une connexion électrique lorsqu'elle est assemblée autour d'une fiche femelle (53), qui inclut des moyens (87) de réception de l'énergie électrique et qui a la forme d'une saillie (83), comportant
(1) une partie électriquement conductrice (65, 67) qui est reliée à un conducteur central (57a) d'un câble (57) d'alimentation en énergie électrique et présente une partie de connexion (67a) pour se connecter à une borne de contact (85) de la fiche femelle (53);
(2) une partie formant couche isolante (61) prévue autour de la partie conductrice (105) pour isoler une gaine extérieure (71) à l'égard des portions de la fiche mâle qui sont sous haute tension;
(3) une portion d'assemblage (69) comprenant une cavité dont l'ouverture s'assemble autour de la fiche femelle (53) de façon à faciliter la connexion entre la borne de contact (85) de la fiche femelle et la partie de connexion (67a) de la fiche mâle;
(4) des moyens de mise sous pression pour augmenter la rigidité diélectrique de la partie formant couche isolante (61) en y exerçant une pression, caractérisée
(5) par une partie (63), formant couche semiconductrice, prévue autour de la partie conductrice (65, 67) de façon à empêcher les hautes tensions de se concentrer dans les parties étroites de la fiche mâle, l'extérieur de ladite partie (63) formant couche semiconductrice étant entouré par ladite partie 61) formant couche isolante;
(6) lesdits moyens de mise sous pression étant obtenus par une légère diminution de la dimension intérieure de la portion d'assemblage (69) en comparaison de la dimension extérieure de la fiche femelle (83);
(7) des moyens de commande de la pression pour faire qu'une pression uniforme soit obtenue par une adaptation variable desdites dimensions;
(8) des moyens de maintien (71a) pour que dans une certaine relation la fiche mâle (55) soit en prise avec la fiche femelle (53).

2. Fiche mâle selon la revendication 1, dans laquelle
(1) la portion d'assemblage (69) a la forme d'un tronc de cône dans lequel le diamètre de l'ouverture est supérieur à celui de la portion d'extrémité supérieure et dans lequel la hauteur est légèrement plus grande que celle de la saille (83) de la fiche femelle (53) de façon à créer un vide lorsqu'elles sont assemblées;
(2) la portion d'assemblage (69) présente une portion avant ouverte constituée de la partie (61) formant couche isolante et une portion arrière annulaire (63) constituée de la partie (63) formant couche semiconductrice dont la paroi intérieure recouvre complètement le vide; en outre
(3) le gradient d'inclinaison de la paroi latérale de la portion ouverte (69b) correspondant à la portion annulaire (63a) est légèrement supérieur à celui correspondant à la partie formant couche isolante de façon que la différence entre le diamètre intérieur de la portion annulaire et le diamètre extérieur de la saillie de la fiche femelle se réduise graduellement en allant vers la portion d'extrémité supérieure, ce par quoi on peut convenablement commander la pression à appliquer sur la face de contact.

3. Fiche mâle selon la revendication 2 dans laquelle la différence entre le diamètre intérieur de la portion annulaire (63a) et le diamètre extérieur de la saillie (83) se réduit linéairement en allant vers l'extrémité supérieure de façon à commander la pression à appliquer sur la face de contact.

4. Fiche mâle selon la revendication 3 dans laquelle la différence devient nulle à la portion d'extrémité supérieure de la portion annulaire (63a).

5. Fiche mâle selon l'une quelconque des revendications 2 à 4, dans laquelle la portion en forme de tronc de cône formant jupe dans la portion d'assemblage a une surface légèrement concave et la portion formant jupe correspondante de la saillie de la fiche femelle a une surface légèrement convexe.

6. Fiche mâle selon l'une quelconque des revendications 2 à 4, dans laquelle la portion en forme de tronc de cône formant jupe dans la portion d'assemblage a une surface légèrement convexe et la portion formant jupe correspondante de la saillie de la fiche femelle a une surface légèrement concave.

7. Fiche mâle selon l'une quelconque des revendications 1 à 6, dans laquelle la fiche mâle a la forme d'un L et comporte une portion d'assemblage à l'une de ses extrémités et une ouverture pour connexion avec un câble d'alimentation en énergie électrique à son autre extrémité.

8. Fiche mâle selon l'une quelconque des revendications 1 à 6, dans laquelle la fiche mâle a la forme d'un T.
